Europäisches Patentamt

European Patent Office

Office européen des brevets

(11) Veröffentlichungsnummer: **0 139 787**
**A2**

(12) # EUROPÄISCHE PATENTANMELDUNG

(21) Anmeldenummer: 83113034.9

(22) Anmeldetag: 23.12.83

(51) Int. Cl.⁴: **E 05 B 49/00**

(30) Priorität: 24.10.83 DE 3338608

(43) Veröffentlichungstag der Anmeldung:
08.05.85 Patentblatt 85/19

(84) Benannte Vertragsstaaten:
AT BE CH DE FR GB IT LI NL SE

(71) Anmelder: Meister, Klaus, Dr.
Am Fischerwinkel 3
D-8022 Grünwald(DE)

(71) Anmelder: Meyers, Pierre
Nimrodstrasse 7a
D-8012 Ottobrunn(DE)

(72) Erfinder: Meister, Klaus, Dr.
Am Fischerwinkel 3
D-8022 Grünwald(DE)

(72) Erfinder: Meyers, Pierre
Nimrodstrasse 7a
D-8012 Ottobrunn(DE)

(54) Programmierbare Verschlusseinrichtung mit Schlüsselkarte und/oder Tastatur.

(57) Vorgestellt werden Schaltungsanordnungen und zugehörige Schlüsselkarten zum Betreiben von programmierbaren Verschlußeinrichtungen, bei denen zum Öffnen und Schließen kodierte Schlüsselkarten Verwendung finden. Die Verschlußeinrichtungen verfügen über Einrichtungen zum einfachen Einprogrammieren eines neuen Öffnungskodes.

Abhängig vom Einsatzzweck der Verschlußeinrichtung an Türen mit längerfristig gleichbleibenden Benutzern oder an Türen mit häufig wechselnden Benutzern werden die Schalteinrichtungen zum Neueinprogrammieren unterschiedlich ausgeführt.

Im ersten Fall verfügt die Elektronik der Verschlußeinrichtung über eine Einrichtung, durch welche die Anordung vom berechtigten Benutzer in den Zustand "Neueinprogrammierung" gebracht werden kann, woraufhin durch einfaches Einführen einer Schlüsselkarte deren Kode als Schloßkode in den Speicher übernommen wird.

Im zweiten Fall verfügt die Elektronik der Verschlußeinrichtung über eine Einrichtung, durch welche die Verschlußeinrichtung z.B. vom Personal des Hotels zur Übernahme eines neuen Kodes vorbereitet wird. Die Übernahme selbst erfolgt erst dann, wenn ein neuer Gast seine Schlüsselkarte einführt.

Die Schlüsselkarten enthalten einen beim Hersteller aufgebrachten Kode: in matrixförmig angeordneten Durchbrüchen einer Isolierschicht, die auf einer leitfähigen Fläche aufgebracht ist, werden Isolierinseln aufgebracht bzw. nicht aufgebracht. Diese Isolierinseln bewirken, daß an der jeweiligen Matrixstelle elektrischer Kontakt zur leitfähigen Fläche verhindert wird bzw. möglich bleibt.

Abhängig vom Einsatzzweck an Türen mit längerfristig gleichbleibenden oder häufig wechselnden Benutzern werden die Schlüsselkarten unterschiedlich gestaltet.

Fig. 1

EP 0 139 787 A2

Croydon Printing Company Ltd.

0139787

*Dipl.Ing. Pierre Meyers*
*Nimrodstr. 7a*
*8012 Ottobrunn*

*Dr. Klaus Meister*
*Am Fischerwinkel 3*
*8022 Grünwald*

*6. Dezember 1983*

B e s c h r e i b u n g

*Programmierbare Verschlußeinrichtung mit Schlüsselkarte und/ oder Tastatur*

*Die Erfindung betrifft eine elektronische Verschlußeinrichtung, bei der zum Öffnen eine kodierte Schlüsselkarte·Verwendung findet und die über eine Einrichtung zum einfachen Einprogrammieren eines neuen Öffnungskodes verfügt. Besonders geeignet ist diese Verschlußeinrichtung zur Anwendung an Türen. Bei Türen, die von häufig wechselnden Benutzern bedient werden - wie z.B. in Hotels, Pensionen usw. - sind die Anforderungen an die Verschlußeinrichtung und damit deren Ausgestaltung anders als bei Türen in privaten Einzelwohnanlagen - wie z.B. Wohnungen und Privathäuser - wo die Benutzer nur selten wechseln. Im folgenden wird zunächst die Ausgestaltung für Hotelanwendung beschrieben und später die Ausgestaltung für private Wohnanlagen.*

*Für Hotelanwendungen sind verschiedene Ausführungen von Verschlußeinrichtungen bekannt geworden, die als gemeinsames Merkmal einen Speicher enthalten, in den ein Öffnungskode einprogrammiert ist, die eine Schlüsselkarte mit überwiegend durch Lochungen versehenen Kode verwenden, bei denen ein Vergleich hergestellt wird zwischen dem im Speicher eingeschriebenen Kode und dem auf der Schlüsselkarte enthaltenen Kode*

0139787

und bei denen, wenn Übereinstimmung zwischen den beiden genannten Kodes besteht, eine mechanische Türverriegelung betätigt oder zur Betätigung freigegeben wird.

Unterschiede bezüglich der bekannt gewordenen Ausführung bestehen neben der verwendeten mechanischen Verriegelungsvorrichtung, die nicht Gegenstand dieser Erfindung ist, insbesondere hinsichtlich der verwendeten Schlüsselkarte und der darin enthaltenen Informationen sowie hinsichtlich der Art und Weise, wie ein nicht mehr gewünschter, in einem Speicher enthaltener Kode gelöscht und durch einen neuen Kode ersetzt wird.

Ein hier benutztes Verfahren beruht auf der Verwendung eines zentralen Rechners mit Speicher, der mit jeder Verschlußeinrichtung z.B. aller Türen eines Hotels mittels Kabel verbunden ist und der die Einprogrammierung eines neuen Kodes in die Verschlußeinrichtung durchführt neben der Erstellung und Ausgabe einer identisch programmierten Schlüsselkarte.

Die Nachteile dieses Verfahrens sind gegeben durch die sehr hohen Installationskosten, durch die Abhängigkeit aller Verschlußeinrichtungen eines ganzen Hauses von der richtigen Funktion dieses zentralen Gerätes sowie durch die Möglichkeit des Mißbrauchs durch Unbefugte oder kriminelle Elemente, der nur dadurch verhindert wird, daß die befugten Bediener der zentralen Kodeänderungs- und Schlüsselausgabestelle ihrerseits einen Kode besitzen und eingeben müssen, um die Veränderung an einer Verschlußeinrichtung bewirken und einen neuen Schlüssel anfertigen zu können.

Um die Nachteile der hohen Installationskosten des erstgenannten Verfahrens zu umgehen, sind Lösungen bekannt geworden, bei denen nach wie vor eine zentrale Änderungsstelle nötig ist, bei denen jedoch die gewünschte Änderung des Speicherinhalts den Verschlußeinrichtungen nicht mehr über Kabel mitgeteilt werden muß, sondern als spezielle Information auf der neu ausgestellten Schlüsselkarte enthalten ist.

Ein derartiges System ist beschrieben in EP 0 044 630 A1. Hier findet eine gelochte Karte Verwendung, die mittels optischer Mittel gelesen wird und die als Information neben dem neuen gewünschten Öffnungskode einen Rechenkode enthält, der in definierter Weise unter Zugrundelegung des bereits in der Verschlußeinrichtung enthaltenen Kodes gebildet wird. Wird diese Schlüsselkarte in die Verschlußeinrichtung eingeführt, so erkennt die Logik dieser Verschlußeinrichtung, daß ein berechtigter neuer Schlüssel vorliegt, öffnet daraufhin die Verschlußeinrichtung und übernimmt den neuen Öffnungskode dieser Schlüsselkarte als Sollkode in den Speicher.

Dieses System bietet bereits erhebliche Vorteile gegenüber einem zentralen, verkabelten System, hat jedoch nach wie vor den großen Nachteil, auf eine zentrale Einrichtung angewiesen zu sein, welche die Information aller momentan vergebenen Öffnungskodes gespeichert hält und in der Lage ist, bei Bedarf neue Schlüsselkarten auszustellen. Von der korrekten Funktion dieser zentralen Anlage und von der Verhinderung ihrer mißbräuchlichen Benutzung hängen Zuverlässigkeit und Sicherheit aller Verschlußeinrichtungen eines ganzen Hauses ab. Nachteilig sind auch die Kosten dieser zentralen Anlage, die eine Anwendung dieses Verfahrens in kleineren Hotels mit wenigen Zimmern als ökonomisch wenig sinnvoll erscheinen lassen.

Aufgabe der Erfindung ist es daher, den bekannten Stand der Technik so weiterzubilden, daß sowohl für die programmierbaren Verschlußeinrichtungen selbst als auch für die Schlüsselkarten einfachste Anordnungen Verwendung finden können, die völlig auf ein zentrales Rechen- und Speichergerät verzichten, die billig in der Herstellung sind und einfach in der Handhabung, wirkungsvoll gegen jeden Mißbrauch geschützt sind und in Hotels aller Größenordnungen ökonomisch sinnvoll Verwendung finden können.

Diese Aufgabe wird erfindungsgemäß dadurch gelöst, daß die programmierbare Verschlußeinrichtung an der Türinnenseite einen nur vom Personal z.B. eines Hotels zu betätigenden Schalter enthält, mit dessen Hilfe die Elektronik in den Zustand "Neueinspeichern"

geschaltet werden kann, daß Schlüsselkarten Verwendung finden, die vom Herstellerwerk bereits mit einem festen Kode versehen sind, daß die Schlüsselkarten darüber hinaus ein Element enthalten, das diese als "Neukarte" kennzeichnet und welches beim erstmaligen Einführen in das Lesegerät einer Verschlußeinrichtung zerstört wird, daß bei diesem erstmaligen Einführen der neuen Schlüsselkarte in die Lesevorrichtung einer auf "Neueinspeichern" geschalteten Verschlußeinrichtung sowohl die Verschlußeinrichtung zum Öffnen freigegeben wird als auch der auf dieser Schlüsselkarte enthaltene Kode in den Speicher eingelesen wird und die Elektronik vom Zustand "Neueinspeichern" wieder weggeschaltet wird.

Von besonderem Vorteil erweist sich die gegenüber dem Stand der Technik bemerkenswerte Einfachheit der Elektronik, die nun nicht mehr auf Grund einer aufwendigen Mustererkennung feststellen muß, ob eine berechtigte Neukarte vorliegt, sondern der dieses durch einen Schalter mitgeteilt wird, dessen einmalige Betätigung durch das Personal z. B. in einem RS - Flip Flop gespeichert wird und zwar so lange, bis eine Neukarte eingeführt wurde und deren Kode im Speicher der Verschlußeinrichtung eingelesen ist.Daraufhin findet bei jedem weiteren Einführen dieser Schlüsselkarte der übliche Vergleich der Kodes von Schlüsselkarte und Speicher statt und es wird jedes Mal, wenn beide Kodes übereinstimmen, die Verschlußeinrichtung zur Betätigung freigegeben.

Der eigentliche Vorteil liegt jedoch in der Art der verwendeten Schlüsselkarten begründet, die vom Hersteller der Karten mit einem festen Kode versehen sind, der für jede einzelne Schlüsselkarte mit einem Zufallsgenerator gebildet wurde, wobei mehrere Millionen Möglichkeiten gegeben sind und es daher praktisch nie vorkommen wird, daß in einem Haus zwei identische Schlüsselkarten vorhanden sind. Da die auf "Neueinspeichern" geschaltete Verschlußeinrichtung jede neue Schlüsselkarte annimmt, ist keine Reihenfolge bestimmter Art in der Verwendung der in einem Hause vorrätig gehaltenen Schlüsselkarten erforderlich.

Es entfällt damit ein zentrales Gerät, welches Schlüsselkarten erst bei Bedarf und nur in Kenntnis der in den jeweiligen Verschlußeinrichtungen bereits eingespeicherten Kodes herstellen kann, wodurch also wesentliche Vorteile gegenüber dem bekannten Stand der Technik gegeben sind sowohl hinsichtlich der Kosten als auch hinsichtlich der Handhabung, der Sicherheit und der Zuverlässigkeit. Damit wird dieses System in ökonomisch sinnvoller Weise anwendbar auf Hotels jeder Größenord-nung.

Die Schlüsselkarten sind als Doppel- oder Mehrfachkarten hergestellt mit einer Perforation an der Trennungslinie der einzelnen Karten, wobei jeweils zwei oder mehrere Karten einen identischen Kode tragen. Nach Auftrennung in einzelne Karten können damit an zwei oder mehr Personen Schlüsselkarten für ein und dieselbe Verschlußeinrichtung ausgegeben werden. Gleichkodierte Schlüsselkarten können aber auch als Einzelkarten hergestellt sein und werden dann durch eine entsprechende Verpackung gegen Verwechslung mit anders kodierten Schlüsselkarten geschützt.

Des weiteren enthalten die Schlüsselkarten einen im Herstellerwerk aufgebrachten Kode, der sich nur einseitig auf der Schlüsselkarte befindet - ohne Lochungen derselben - und der mittels einer galvanischen Abtastung gelesen wird. Damit bleibt die andere Seite der Schlüsselkarte, die durch keine Löcher zerstört ist, frei für Aufdrucke, die im Belieben des Hotelbetreibers liegen.

Bei Ausführung der Erfindung zur speziellen Anwendung in Ver-schlußeinrichtungen von Türen, die von längerfristig gleichbleibenden Benutzern bedient werden - wie z.B. für private Haus- und Wohnungstüren - können an die Schalteinrichtungen zum Neueinprogrammieren einer Schlüsselkarte weniger hohe Ansprüche gestellt werden, da das Neueinprogrammieren hier nur selten erforderlich ist - z.B. bei Schlüsselverlust oder bei Mieterwechsel - und da dort das Neueinprogrammieren nur vom Benutzer, der den Programmierschlüssel besitzt, selbst durchge-führt wird.

0139787

Dagegen müssen bei dieser Anwendung an Festigkeit und Dauerhaftigkeit der Schlüsselkarte sehr hohe Ansprüche gestellt werden, da sie für lange Zeiträume in Benutzung bleibt. Ausserdem sollten Maßnahmen getroffen sein, die ein einfaches optisches Ablesen des auf der Schlüsselkarte enthaltenen Kodes verhindern, um dadurch die Nachfertigung einer gleich-kodierten Schlüsselkarte durch Kriminelle zu erschweren.

Programmierbare Verschlußeinrichtungen für private Haus- und Wohnungstüren können neben der Leseeinrichtung für die Schlüsselkarte eine weitere Kodeeingabevorrichtung in Form einer Tastatur enthalten. Beide Kodeeingabevorrichtungen geben dann ihre elektrischen Signale auf die gleichen Leitungen der Auswerteelektronik. Die Schlüsselkarte muß in diesem Fall ein gegenüber der Tastatur zusätzliches Signal erzeugen, um eine Unterscheidung zwischen von der Tastatur und von der Schlüsselkarte herrührenden Signalen zu ermöglichen.

Die spezifischen Aufgaben für die Anwendung bei längerfristig gleichbleibenden Benutzern werden erfindungsgemäß dadurch gelöst, daß die Schaltervorrichtung als im Inneren der Sicherheitsanlage angeordneter Schalter ausgebildet ist, der nur im eingeschalteten Zustand die Programmschaltmittel derart wirksamschaltet, daß die Schließeinrichtung die Schlüssel-Kodeinformation einer eingeführten Schlüsselkarte und/oder die Kodeinformation, die durch eine Tastatur erzeugt wird, als Schloß-Kodeinformation übernimmt.

Die Schlüsselkarte ist als massiver, elektrisch leitender Träger ausgebildet, der mit einer elektrisch nicht-leitenden Schicht abgedeckt ist, die an allen möglichen Kodeelementstellen Durchbrüche aufweist. In diese Durchbrüche wird für alle Kodeelementstellen, die z.B. einen "logisch 0"-Zustand darstellen sollen, eine elektrische Isolierschicht hineingelegt. Jene Durchbrüche, die z.B. einen "logisch 1"-Zustand darstellen sollen, bekommen keine Isolierschicht.

Um die Kodierung einem unberechtigten Betrachter zu verschleiern, werden sämtliche Kodeelementstellen mit einem elektrisch leitfähigen und mechanisch abriebfesten Material überdruckt. Die Kodeelementstellen sind damit im Aussehen alle gleich und sind elektrisch mit dem Trägerkörper verbunden oder nicht verbunden - je nachdem ob zuvor die Isolierschicht in die Durchbrüche hineingelegt worden ist oder nicht.

Die Erfindung wird nun anhand der in den Zeichnungen dargestellten Ausführungsbeispiele näher erläutert. Es zeigen:

Fig.1  eine Schlüsselkarte für Hotelanwendung in Doppelausführung, gesehen auf die Kodierseite,

Fig.2  die verschiedenen Aufbauschichten einer Schlüsselkarte nach Fig.1,

Fig.3  das Blockschaltbild der Elektronik zum Einprogrammieren und Lesen einer Schlüsselkarte nach Fig.1,

Fig.4a  eine Schlüsselkarte für Anwendung an privaten Haus- und Wohnungstüren mit verdecktem Kode in Draufsicht,

Fig.4b  einen Schnitt durch die Schlüsselkarte nach Fig.4a,

Fig.5  das Blockschaltbild der Elektronik zum Einprogrammieren und Lesen einer Schlüsselkarte nach Fig.4a.

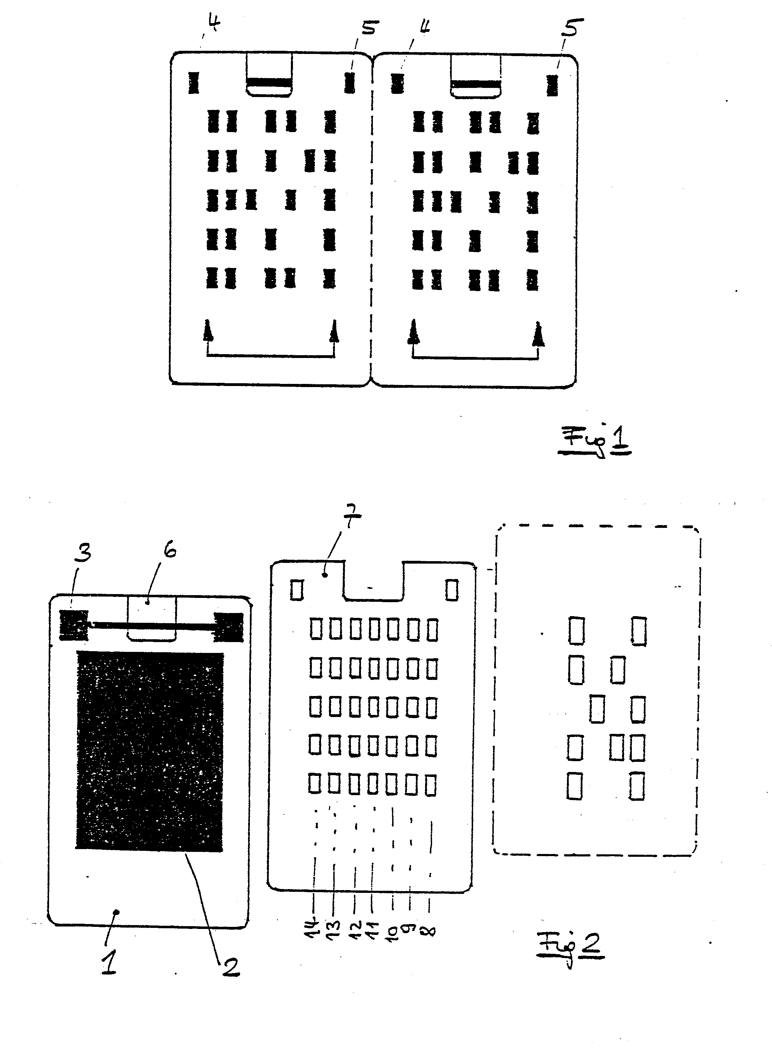

In Fig.1 ist eine Schlüsselkarte in festkodierter Ausführung dargestellt, wie sie dem Betreiber eines Hotels geliefert wird. Fig.1 zeigt dabei die Schlüsselkarte auf die Kodierseite gesehen. Die andere Seite bleibt frei und kann nach Wunsch des Hotelbetreibers bedruckt werden.

Die dargestellte Form als Doppelkarte mit identischem Kode beider Hälften dient dem Zweck, zwei identische Schlüssel für eine Verschlußeinrichtung ausgeben zu können, wie dies zum Beispiel bei Belegung von Doppelzimmern in Hotels oft erforderlich ist. Die Ausführung der Schlüsselkarte soll jedoch nicht auf die Doppelkarte beschränkt bleiben. Sie ist genauso als Einzelkarte, Dreierkarte usw. möglich, falls dies für bestimmte Anwendungen gefordert sein sollte. Die vorhandene Perforation erlaubt die Zerlegung in einzelne Karten zum Zeitpunkt des Bedarfs.

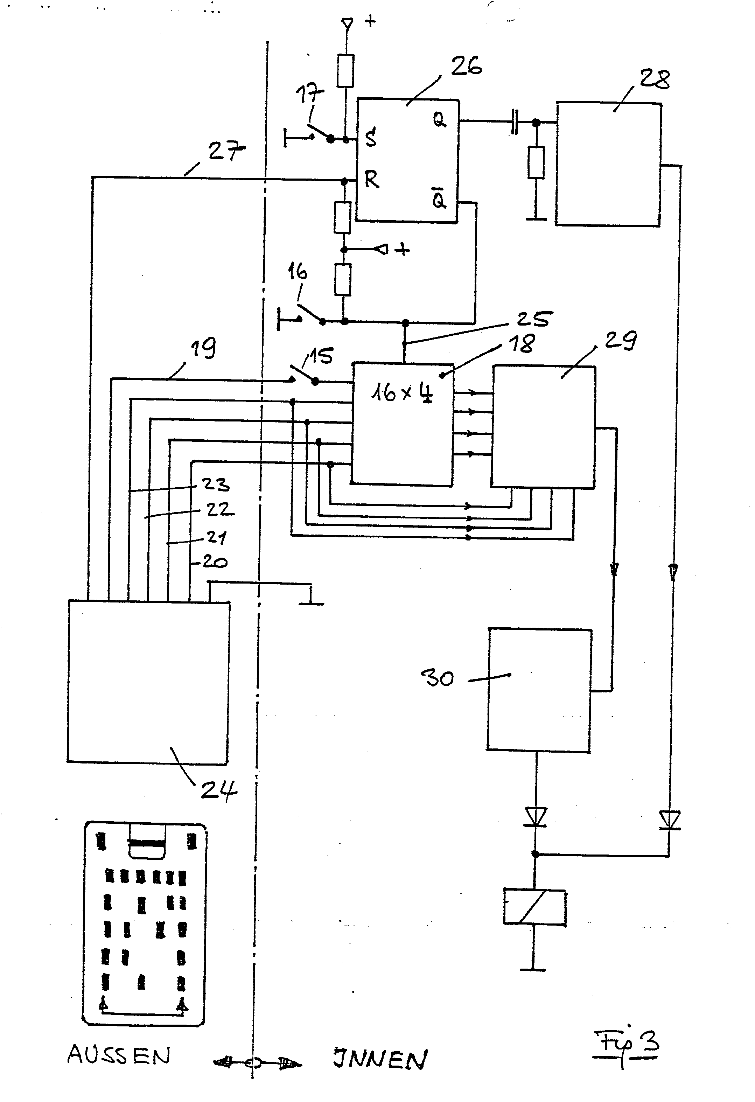

Fig.2 zeigt den Aufbau einer Schlüsselkarte. Die untere Lage 1 besteht aus Papier oder einem anderen, elektrisch nicht leitfähigen Material. Auf diese untere Lage 1 werden durch Bedrukken, Aufdampfen, Aufkleben oder auf eine andere geeignete Weise zwei elektrisch leitfähige Bereiche 2 und 3 aufgebracht.

Der Bereich 2 überdeckt dabei die für die Erzeugung der Steuer- und Kodierinformation benötigte Fläche, während der Bereich 3 der Rücksetzung des Speichers dient, welcher die Information "Neueinlesen" hält. Die leitfähige Verbindung 3 wird etwa in der Mitte zwischen den beiden Kontaktstellen 4 und 5 der Fig.1 beim erstmaligen Einschieben einer Schlüsselkarte in ein Lesegerät durch mechanische Mittel aufgetrennt, wodurch dann der Elektronik ein Unterscheidungsmerkmal zwischen Neu- und Altkarte gegeben ist.

Um das Auftrennen der leitfähigen Schicht zwischen 4 und 5 zu erleichtern, wird diese Schicht an der aufzutrennenden Stelle durch einen zuvor auf die Lage 1 aufgedruckten Steg 6 erhaben aufgebracht und ist an dieser Stelle nicht durch die Isolierschicht 7 abgedeckt. Die Isolierschicht 7 besteht ebenfalls aus einer durch Bedrucken, Aufdampfen, Aufkleben oder auf sonstige geeignete Weise aufgebrachten, elektrisch nicht leitenden Schicht und enthält in Form von Leerstellen das Muster aller möglichen Kontaktstellen.

Dieses Muster besteht - neben den zwei Leerstellen 4 und 5 - aus einer Anzahl von bis zu sieben parallelen Zeilen mit n Spalten, wobei n vorzugsweise 5 oder 6 betragen wird. Die Bedeutung der einzelnen Zeilen kann wie folgt festgelegt sein:

| | |
|---|---|
| Zeile 8 | Steuerinformation für die Elektronik |
| Zeilen 9,10,11,12 | Kodierfeld |
| Zeile 13 | Unterscheidung in Schlüsselkarten für Gast und Personal |
| Zeile 14 | Masseanschluß |

Die Leerstellen der Zeile 8 sind dabei in Kartenvorschubrichtung etwas kleiner ausgeführt als die Leerstellen der übrigen Zeilen, womit sichergestellt wird, daß mit Kontaktgabe in dieser Zeile alle übrigen Zeilen bereits in Kontakt sind.

Als letzter Druckvorgang zur Herstellung einer Schlüsselkarte erfolgt daraufhin die Kodierung der Schlüsselkarte, die darin besteht, daß - durch einen Zufallsgenerator bestimmt - Leerstellen in den Zeilen 9,10,11,12 mit einem elektrisch nicht leitfähigen Material abgedeckt werden und die Zeile 13 für alle Karten, die der Benutzung durch den Gast dienen sollen, ebenfalls abgedeckt wird.

Das Lesen dieser Schlüsselkarte erfolgt durch parallel angeordnete Kontakte im Lesegerät, die abfragen, ob an den vorgesehenen Leerstellen der Isolierschicht 7 eine Verbindung zum Masseanschluß der Zeile 14 besteht oder nicht besteht.

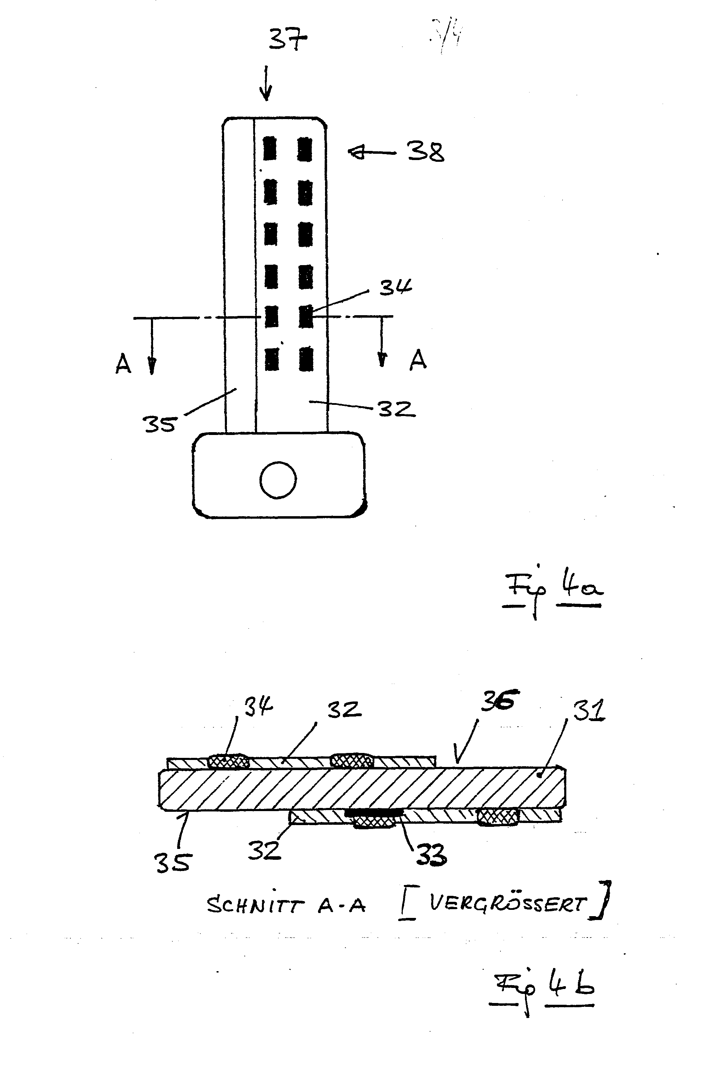

In Fig.3 ist in Form einer Blockschaltbildes die Elektronik einer Verschlußeinrichtung dargestellt, die in Verbindung mit den Schaltern 15,16,17 sowohl das Neueinprogrammieren einer Schlüsselkarte in die Verschlußeinrichtung als auch den normalen Betrieb der Verschlußeinrichtung mit der Schlüsselkarte ermöglicht. Die Elektronik verfügt über einen Schreib-Lese-Speicher 18 mit einer Organisation von 16 x 4 bit. Der Speicher 18 ist in eine Ebene mit den Adressen 0 - 7 und in eine zweite Ebene mit den Adressen 8 - 15 unterteilt.

Ebene 1 und Ebene 2 werden durch die höchstwertige Adreßleitung 19 angewählt und können wie folgt belegt werden:

Ebene 1    Gäste

Ebene 2    Personal

Durch Parallelschaltung weiterer identischer Elektronikschaltkreise können beliebig viele weitere Ebenen geschaffen werden, frei belegbar für weitere Benutzergruppen wie z.B. Service, Master usw. Die Ebene 1 des Speichers 18 wird dadurch zugänglich, daß in der Zeile 13 der Schlüsselkarte keine Kontaktgabe nach Masse erfolgt (Zeile 13 der Schlüsselkarte abgedeckt). Die Ebene 2 des Speichers 18 wird dadurch zugänglich, daß in der Zeile 13 der Schlüsselkarte eine Kontaktgabe nach Masse erfolgt.

Zum Verständnis der Funktionsweise der Elektronik soll hier erwähnt werden, daß sowohl die Adreßleitung 19 als auch die Datenleitungen 20,21,22,23 durch nicht dargestellte Pull-up-Widerstände nach High-Potential gezogen sind und daß durch die Schlüsselkarte diese Leitungen nach Low-Potential gezogen werden können. Die gewählten Polaritäten könnten jedoch auch umgekehrt gewählt sein.

Mit Verschließen der Verschlußeinrichtung von der Türinnenseite aus wird durch ein hiermit verbundenes Öffnen des Schalters 15 die Verbindung des elektrischen Kontakts des Lesegeräts 24, das die Zeile 13 abtastet, zur Elektronik hin unterbrochen, wodurch die Ebene 2 des Speichers 18 nicht mehr zugänglich ist und damit dem Personal der Zugang zu einem Raum, den der Gast von innen abgeschlossen hat, verwehrt wird. Dagegen bleibt der Zugang erhalten für jeden weiteren Gast, der ebenfalls über die gültige Schlüsselkarte verfügt.

Die Steuerung des Speichers 18 hinsichtlich Neueinprogrammieren (Schreiben) bzw. Lesen erfolgt durch die Leitung 25. Ein High-Signal an dieser Leitung bedeutet "Lesen", ein Low-Signal bedeutet "Schreiben" (Neueinprogrammieren).

0139787

Diese Leitung kann mittels des Schalters 16 direkt nach Low-Potential gezogen werden. Die Benutzung dieses Schalters erfolgt immer dann, wenn eine neue Personal-Schlüsselkarte einprogrammiert werden soll.

Die Einprogrammierung einer Gäste-Schlüsselkarte erfolgt dagegen nur dann, wenn zuvor durch das Personal der Schalter 17 kurzzeitig betätigt wurde und dadurch die Elektronik mittels eines bistabilen Flip - Flop 26 in den Zustand "Neueinprogrammieren" geschaltet wurde. Wird in eine dermaßen vorbereitete Elektronik eine neue Gäste-Schlüsselkarte eingeführt, so wird deren Inhalt in den Speicher übernommen. Wird diese Gäste-Schlüsselkarte durch eine intakte Verbindung 4-5 als Neukarte erkannt, so wird durch diese Verbindung über die Leitung das Flip - Flop zurückgesetzt und der Speicherinhalt bleibt somit eingefroren. Gleichzeitig wird durch ein monostabiles Element 28 ein Signal von mehreren Sekunden Dauer erzeugt, über das die Verschlußeinrichtung auf Öffnen geschaltet wird, wodurch der Gast Zugang zum versperrten Raum erhalten kann. Mit Herausziehen der Gäste-Schlüsselkarte aus dem Lesegerät 24 wird die Verbindung 4-5 der Schlüsselkarte mechanisch aufgetrennt. Die Schlüsselkarte ist damit für ein weiteres Neueinprogrammieren nicht mehr brauchbar.

Mit jedem Einführen einer Schlüsselkarte in das Lesegerät 24 erfolgt bei geöffneten Schaltern 16,17 und rückgesetztem Flip - Flop 26 ein Vergleich der im Speicher 18 enthaltenen Daten mit den neueingelesenen Daten. Ein Komparator 29 vergleicht beide Daten und bewirkt über eine Ansteuerelektronik 30 die Bestromung des Magneten, wodurch die Verschlußeinrichtung auf "Öffnen" geschaltet ist.

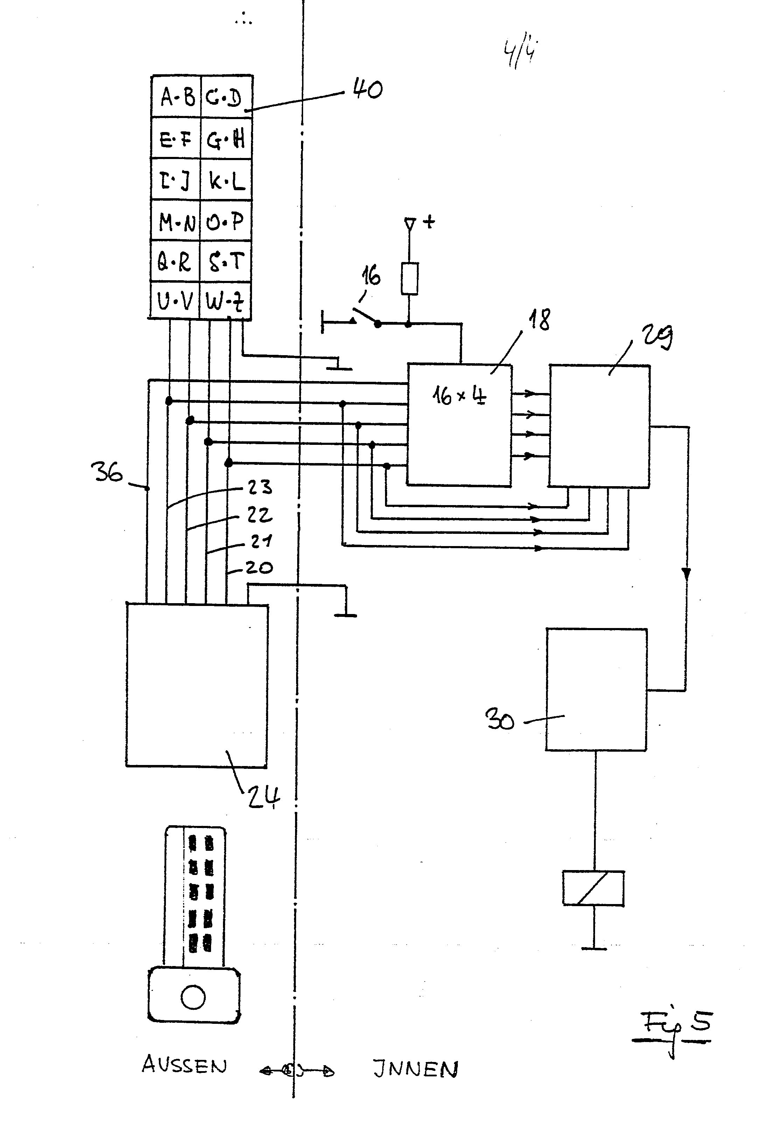

In den Fig.4a und 4b ist eine Schlüsselkarte in Ganzmetallausführung dargestellt wie sie an privaten Haus- und Wohnungstüren zum Einsatz kommen soll. Gezeigt wird eine bevorzugte Ausführungsform als zweiseitig kodierte Schlüsselkarte. Die Schlüsselkarte besteht aus einem metallischen Träger 31 ausreichender Dicke, um eine sehr große Biegesteifigkeit zu erreichen.

0139787

Die Schlüsselkarte ist beidseitig mit einer an allen Kode-elementstellen Durchbrüche aufweisenden elektrisch isolie-renden Schicht 32 bedruckt. Die Kodeelementstellen, die z.B. eine "logisch 0" darstellen, werden vornehmlich vor der Aufbringung der Schicht 32 durch Aufdrucken isolierender Bereiche 33 erzeugt, wobei die Abmessungen dieser Bereiche 33 etwas größer sind als die Durchbrüche der Abdecksicht 32.

Für die Kodeelementstellen, die z.B. eine "logisch 1" darstellen, entfällt der Druck der isolierenden Bereiche 33, so daß an diesen Stellen die Durchbrüche der Abdeckschicht 32 einen direkten Zugang zum Träger 31 zulassen.

Um dem unberechtigten Betrachter einer Schlüsselkarte den effektiven elektrischen Kode dieser Schlüsselkarte zu verschleiern, werden nachfolgend sämtliche Kodeelementstellen mit elektrisch leitfähigen Bereichen 34 bedruckt, deren Abmessungen so gestaltet sind, daß die Durchbrüche gerade ausgefüllt und aufgefüllt werden.

Die isolierende Abdeckschicht 32 wird flächenmäßig nur so weit aufgebracht, daß beidseitig ein freier Randstreifen 35 erhalten bleibt. Diese Randstreifen werden zum einen benutzt zur Potentialzuführung zwecks Abfrage der elektrischen Zustände der Kodeelementstellen mit Hilfe einfacher Kontaktfinger und zum anderen zum Anschalten der Leitung 36 der Fig.5 an das zugeführte Potential und damit zur Kennzeichnung der Signale, die an den Kodeelementstellen abgenommen werden, als von einer Schlüsselkarte herrührend.

Die Kodeelementstellen sind matrixförmig angeordnet, wobei auf jeder der beiden Seiten der Schlüsselkarte vornehmlich zwei Zeilen 37 und sechs Spalten 38 zur Anwendung kommen. Damit wird eine Kombinationsvielfalt von 11 Mio Möglichkeiten erreicht, so daß praktisch am gleichen Ort nie zwei Schlüssel mit gleicher Kodierung vorkommen werden.

Die Schlüsselkarten werden in Losen einer vorgegebenen Stückzahl mit jeweils gleicher Kodierung der Schlüsselkarten eines Loses hergestellt und sind durch gleichfarbige Griffleisten sowie eine geeignet gewählte Verpackung gegen Vertauschen geschützt.

In Fig.5 ist die gegenüber der Fig.3 vereinfachte Elektronik dargestellt, die in Verbindung mit dem Schalter 16 in bereits beschriebener Art das Neueinprogrammieren einer Schlüsselkarte wie auch den normalen Betrieb der Verschlußeinrichtung mit der Schlüsselkarte ermöglicht.

Der Speicher 18 ist wiederum in eine Ebene 1, bestehend aus den Adressen 0 - 7 und in eine Ebene 2, bestehend aus den Adressen 8 - 15, unterteilt. Die Ebene 1 des Speichers 18 wird dadurch zugänglich, daß an die höchstwertige Adreßleitung 36 Masse angeschaltet wird, die Ebene 2 des Speichers 18 dadurch, daß an diese Leitung keine Masse angeschaltet wird. Die Ebene 1 des Speichers wird demzufolge mit den Signalen belegt, die von einer Schlüsselkarte erzeugt werden. Die Schlüsselkarte schaltet selbst bei ihrer Einführung in das Lesegerät die Leitung 36 nach Masse.

Die Ebene 2 des Speichers ist belegt mit den Signalen, die von einer Tastatur 40 herrühren.

Die Daten der beiden Eingabeelemente Schlüsselkarte und Tastatur gelangen auf dieselben Datenleitungen 20,21,22,23. Der Betrieb der Verschlußeinrichtung ist somit in gleicher Weise durch Benutzung der Schlüsselkarte oder Benutzung der Tastatur möglich.

Beide Ebenen des Speichers sind unabhängig voneinander änderbar.

0139787

Dipl.Ing. Pierre Meyers        6. Dezember 1983
Nimrodstr. 7a
8012 Ottobrunn

Dr. Klaus Meister
Am Fischerwinkel 3
8022 Grünwald


Patentansprüche

1. Schaltungsanordung zum Betreiben von programmierbaren Schließeinrichtungen mittels Schlüsselkarten mindestens einer vorgegebenen Art durch Vergleich der auf der Schlüsselkarte fest vorgegebenen Schlüssel-Kodeinformation mit der in der Schließeinrichtung jeweils eingespeicherten Schloß-Kodeinformation in Sicherheitsanlagen mit vorzugsweise mindestens zwei gleichberechtigten Betreibern und/ oder mindestens zwei ungleichberechtigten Betreibergruppen der gleichen Schließeinrichtung, insbesondere in Hotelanlagen mit mehreren das gleiche Zimmer betretenden Gästen und/ oder Personalgruppen, in denen jede Schlüsselkarte neben der an einer vorgegebenen Stelle angeordneten und ihr fest zugeteilten Schlüssel-Kodeinformation an einer gleichfalls vorgegebenen Stelle eine weitere Kodeinformation aufweist und die Schließeinrichtung nur beim Erkennen einer solchen weiteren Kodeinformation wirksam werdende Programmschaltmittel aufweist, die die Übernahme der Schlüssel-Kodeinformation der Schließeinrichtung veranlassen,
dadurch gekennzeichnet ,
daß eine nur berechtigten Personen zugängliche Schaltervorrichtung 17 die Schließeinrichtung zur Übernahme der Schlüssel-Kodeinformation vorbereitet, daß die auf der Schlüsselkarte vorgesehene weitere Kodeinformation (Brücke 4-5) die Übernahme der Schlüssel-Kodeinformation veranlaßt und die Vorbereitung der Schließeinrichtung wieder aufhebt (Fig.3).

2. Schaltungsanordnung zum Betreiben von programmierbaren Schließeinrichtungen in Sicherheitsanlagen mittels Schlüsselkarten einer vorgegebenen Art durch Vergleich der auf der Schlüsselkarte fest vorgegebenen Schlüssel-Kodeinformation mit der in der Schließeinrichtung jeweils eingespeicherten Schloß-Kodeinformation, wobei jede Schlüsselkarte eine an einer vorgegebenen Stelle angeordnete und ihr fest zugeteilte Schlüssel-Kodeinformation aufweist und die Schließeinrichtung Programmschaltmittel aufweist, welche die Übernahme der Schlüssel-Kodeinformation der eingegebenen Schlüsselkarte als Schloß-Kodeinformation der Schließeinrichtung veranlassen, und in denen eine nur berechtigten Personen zugängliche Schaltervorrichtung die Schließeinrichtung zur Übernahme der Schlüssel-Kodeinformation vorbereitet,

d a d u r c h   g e k e n n z e i c h n e t ,
daß die Schaltervorrichtung als im Inneren der Sicherheitsanlage angeordneter Schalter ausgebildet ist, der nur im eingeschalteten Zustand die Programmschaltmittel derart wirksamschaltet, daß die Schließeinrichtung die Schlüssel-Kodeinformation einer eingeführten Schlüsselkarte und/oder die Kodeinformation, die durch eine Tastatur erzeugt wird, als Schloß-Kodeinformation übernimmt.


3. Schlüsselkarte nach Anspruch 1,
d a d u r c h   g e k e n n z e i c h n e t ,
daß die Schlüsselkarte einseitig eine matrixförmige Kodierung trägt und daß die andere Seite der Schlüsselkarte frei und unzerstört bleibt für beliebige Aufdrucke, daß die Kodierung so gestaltet ist, daß zumindest die in der gleichen Reihe (Zeile oder Spalte) vorgesehenen Kodeelemente elektrisch leitend untereinander verbunden sind (Fig.1).

4. Schlüsselkarte nach Anspruch 3,

   d a d u r c h   g e k e n n z e i c h n e t ,

   daß die Kodeelemente Abschnitte auf einer durchgehenden, elektrisch leitfähigen Platte 2 sind, die durch eine an den Kodeelementstellen Durchbrüche aufweisende elektrisch nicht-leitfähige Schicht abgedeckt sind (Fig.2).

5. Schlüsselkarte nach Anspruch 3 oder 4,

   d a d u r c h   g e k e n n z e i c h n e t ,

   daß die weitere Kodierung durch zwei auftrennbar gestaltete und an einem Kartenrand angebrachte elektrisch leitend miteinander verbundene Kodestellen 4-5 gebildet ist, wobei die eine Kodestelle mit der durchgehenden Platte des Anspruchs 4 identisch sein kann, und die Verbindung bei der erstmaligen Benutzung der Schlüsselkarte in der Schließeinrichtung aufgetrennt wird (Fig.1 und 2).

6. Schlüsselkarte nach Anspruch 3 oder 4,

   d a d u r c h   g e k e n n z e i c h n e t ,

   daß die Schlüsselkarte neben den Zeilen und Spalten, in welche sowohl der Öffnungskode wie auch Steuerinformationen eingeschrieben sind, eine spezielle Zeile 13 enthält, die der Kennzeichnung der Schlüsselkarte als Schlüssel für den Gast oder das Personal dient (Fig.2).

7. Schlüsselkarte nach Anspruch 3 oder 4,

   d a d u r c h   g e k e n n z e i c h n e t ,

   daß die Schlüsselkarte als gleichkodierte Mehrfachkarte hergestellt ist, die auf einfache Weise bei Bedarf in Einzelkarten zerlegt werden kann (Fig.1).

8. Anordnung nach Anspruch 1,

   d a d u r c h   g e k e n n z e i c h n e t ,

   daß durch einen Schalter 15, der mit innenseitigem Verschließen der Türe geöffnet wird, die Verbindung der Zeile 13 der Schlüsselkarte zur Elektronik aufgetrennt wird und daß damit die Personalkarten für das Öffnen gesperrt werden (Fig.3).

9. Schlüsselkarte nach Anspruch 2,

d a d u r c h   g e k e n n z e i c h n e t ,

daß die Schlüsselkarte auf mindestens einer Seite eine matrixförmige Kodierung trägt, die so gestaltet ist, daß zumindest die jeweils in der gleichen Reihe (Zeile oder Spalte) vorgesehenen Kodeelemente elektrisch leitend miteinander verbunden sind.

10. Schlüsselkarte nach Anspruch 2,

d a d u r c h   g e k e n n z e i c h n e t ,

daß die Kodeelemente Abschnitte auf einer durchgehenden elektrisch leitenden Platte 31 sind, die durch eine an den Kodeelementstellen, welche z.B. einen "logisch 1"-Zustand darstellen, Durchbrüche aufweisende elektrisch nichtleitende Schicht 32 abgedeckt ist (Fig.4b).

11. Schlüsselkarte nach Anspruch 2 oder 10,

d a d u r c h   g e k e n n z e i c h n e t ,

daß die durchgehende, elektrisch leitende Platte 31 mit einer an allen möglichen Kodeelementstellen Durchbrüche aufweisenden elektrisch nichtleitenden Schicht 32 abgedeckt ist und daß die Kodeelementstellen, welche z.B. einen "logisch 0"-Zustand darstellen sollen, vor Aufbringung oder nach Aufbringung der Schicht 32 durch einen weiteren Aufdruck elektrisch von der leitenden Platte 31 isoliert werden und daß die Kodeelementstellen, welche z.B. einen "logisch 1"-Zustand darstellen sollen, nicht isoliert werden (Fig.4b).

12. Schlüsselkarte nach Anspruch 11,

d a d u r c h   g e k e n n z e i c h n e t ,

daß sowohl die von der elektrisch leitenden Platte 31 isolierten wie auch die nicht isolierten Kodeelementstellen mit elektrisch leitenden Flächenelementen 34 überdeckt sind, wodurch sämtliche Elemente als gleichartige Kodeelementstellen vorgetäuscht werden (Fig.4).

13. Schlüsselkarte nach einem der Ansprüche 2, 10, 11,
    d a d u r c h   g e k e n n z e i c h n e t ,
    daß die Schlüsselkarte aus einer, auf ihren beiden Seiten
    je eine Kodierung tragenden durchgehenden Platte 31 aus
    elektrisch leitendem Material besteht (Fig.4).

14. Schlüsselkarte nach einem der Ansprüche 10 bis 13,
    d a d u r c h   g e k e n n z e i c h n e t ,
    daß die Schlüsselkarte neben den matrixförmig angeordneten
    Kodeelementstellen, die jeweils eine zweiwertige elektrische Information darstellen, mindestens ein weiteres der
    Potentialzuführung dienendes Element in Form eines nicht
    abgedeckten Streifens 35 aufweist - insbesondere in Form
    eines Randabschnittes - und
    daß die Schlüsselkarte über mindestens ein weiteres Element in Form eines nichtabgedeckten Streifens 36 verfügt -
    insbesondere in Form des zweiten Randabschnittes - welches
    der Kennzeichnung als Schlüssel dient und die Information
    enthält, daß die erzeugten Signale von einem Schlüssel
    stammen und nicht von einer Tastatur (Fig.4).

0139787

*Fig 1*

*Fig 2*

0139787

16 × 4

AUSSEN  INNEN  Fig 3

37

38

34

A

A

35

32

Fig 4a

34  32  36  31

35  32  33

SCHNITT A-A  [ VERGRÖSSERT ]

Fig 4b

Fig 5